# EUROPÄISCHE PATENTSCHRIFT

(11) **EP 0 845 385 B1**
(45) Veröffentlichungstag und Bekanntmachung des Hinweises auf die Patenterteilung: **23.01.2002**
(21) Anmeldenummer: 97119946.8
(22) Anmeldetag: 14.11.1997
(51) Int. Cl.: B60N 2/32

(54) **Umklappbare Hintersitz-Rückenlehne für Kraftfahrzeuge**
Tiltable rear seat backrest for automotive vehicles
Dossier de siège arrière rabattable pour véhicules automobiles

(30) Priorität: 27.11.1996 DE 19649077
(43) Veröffentlichungstag der Anmeldung: 03.06.1998
(73) Patentinhaber: ADAM OPEL AG, 65423 Rüsselsheim (DE)
(72) Erfinder: Gimbel, Hans-Peter, Dipl.-Ing., 65468 Trebur (DE)

(56) Entgegenhaltungen:
- EP-A- 0 474 368
- EP-A- 0 709 248
- DE-A- 3 810 402
- DE-A- 4 405 698
- DE-A- 19 601 367
- FR-A- 2 663 889

## Beschreibung

Die Erfindung bezieht sich auf eine umklappbare Hintersitz-Rückenlehne für Kraftfahrzeuge, die beidseitig in der Karosseriewandung gelagert ist, mit einem Hinterrükkenrahmen, an dem unten seitlich herausragende Lagerbolzen mit jeweils einer verschiebbaren Lagerbuchse befestigt sind, wobei die Lagerbuchsen in Lagerausnehmungen der Karosseriewandung eingreifen und an ihr innenseitig anliegen.

Eine solche Hintersitz-Rückenlehne ist in der DE 38 10 402 C2 beschrieben. Die Lagerbuchsen können auf dem Lagerbolzen verschoben und in unterschiedlichen Positionen arretiert werden. Diese Maßnahme dient in erster Linie dem Zweck, Breitentoleranzen zwischen den an die Rückenlehne angrenzenden Karosserie-Seitenwänden auszugleichen und auf diese Weise die Hintersitz-Rückenlehnenlagerung mit möglichst geringem Spiel zwischen den Seitenwänden justieren zu können.

Dies wird konkret dadurch realisiert, daß die innenliegenden Enden der Lagerbuchsen als wendelförmig verlaufende Rampen mit mehreren Kerben ausgebildet sind, die mit Querstiften in den Lagerbolzen korrespondieren. Bei einer Drehung der Lagerbuchse läuft der Querstift entlang der Rampe von Kerbe zu Kerbe und drückt dabei die Lagerbuchse nach außen bzw. läßt ihre Verschiebung nach hinten zu.

Auf diese Weise lassen sich die Positionen der Lagerbuchsen relativ zum Hinterrückenrahmen verändern. Nachdem die Hintersitz-Rückenlehne eingebaut worden ist, werden die Lagerbuchsen manuell soweit verdreht bis die Lehne in Querrichtung unverschiebbar justiert ist.

Ein solches Justierverfahren ist aufwendig; außerdem läßt sich eine Hintersitz-Rückenlehne mit einer derart gestalteten Lagerung nicht mit einem Handhabungsautomaten einsetzen.

Der Erfindung liegt daher die Aufgabe zugrunde, eine umklappbare Hintersitz-Rückenlehne zu schaffen, die mittels eines Handhabungsautomaten in das Kraftfahrzeug eingesetzt und die in einfacher Weise justiert werden kann.

Zur Lösung der Aufgabe wird gemäß der Erfindung vorgeschlagen, daß zwischen jeder Lagerbuchse und dem Hinterrückenrahmen eine Feder angeordnet ist, die die Lagerbuchse an die Karosseriewandung und in die zugehörige Lagerausnehmung drückt, und daß die Lagerausnehmungen in Wandabschnitten der Karosseriewandung mit jeweils einer freien Kante vorgesehen sind, wobei ein trichterförmiger Schlitz von der freien Kante in die jeweilige Lagerausnehmung führt.

Bei der Montage werden die Lagerbolzen durch die Schlitze in die Lagerausnehmungen gebracht, wo die gespannten Federn freigegeben werden, so daß sie die Lagerbuchsen in die Lagerausnehmungen und somit an die Karosseriewandung drücken können. Auf diese Weise findet eine Selbstjustierung der Hintersitz-Rückenlehne statt, so daß entsprechende manuelle Maßnahmen entfallen.

Im einfachsten Fall sind die freien Kanten obenliegende Kanten des Wandabschnitts. Dies ermöglicht es, die Hintersitz-Rückenlehne durch Absenken in ihre Einbauposition zu bringen.

Die Feder wird mittels der im folgenden beschriebenen Anordnung gespannt. Parallel zum Schlitz verläuft eine Rampe für die Lagerbuchse, die so geführt ist, daß die Lagerbuchse bei der Absenkbewegung gegen die Federkraft nach innen gedrückt wird. Die auf diese Weise gespannte Feder drückt die Lagerbuchse wieder nach außen, sobald sich der Bolzen im Zentrum der Lagerausnehmung befindet.

Die Rampe kann wie folgt realisiert werden: Der Bereich des Wandabschnitts mit dem Schlitz wird so ausgerichtet, daß er von oben nach unten gesehen schräg nach innen verläuft. Der Wandabschnitt selbst bildet somit eine Rampe bzw. eine Montageschräge.

Die Wandabschnitte mit dem Schlitz und der Lagerausnehmung sind Teil eines kastenförmigen Lagerbocks, der an einer Karosserie-Seitenwand befestigt ist.

Die Lagerbuchse weist vorzugsweise die Form einer Kegelhülse auf, damit sie sich selbsttätig in der Lagerausnehmung zentrieren kann.

Damit die Hintersitz-Rückenlehne bei einem Crash nicht aus ihrer Lagerung gerissen werden kann, sind an den Enden der Lagerbolzen Bolzenköpfe vorgesehen, die hinter den Wandabschnitten liegen und deren Durchmesser größer ist als die der Lagerausnehmungen. Bei einer Kollision, bei der die Rückenlehne nach vorne gerissen wird, krallen sich die Bolzenköpfe an der Karosseriewandung fest, die unter Verformung Anteile der kinetischen Energie der Hintersitz-Rückenlehne aufnimmt.

Für den Fall, daß die Hintersitz-Rückenlehne aus zwei unabhängig voneinander verschwenkbaren Lehnenteilen besteht, werden diese bis zur Montage im Fahrzeug lösbar derart miteinander gekoppelt, daß sie nicht gegeneinander verschwenkt werden können. Für die Montage bilden die beiden Rückenlehnenteile daher eine einheitlich zu handhabende Baugruppe.

Die Kopplung kann mittels eines abscherbaren Arretierbolzens erfolgen, der so angeordnet ist, daß er abgeschert oder durchgebrochen wird, sobald nach erfolgter Montage eines der Lehnenteile umgeklappt wird.

Beide Lehnenteile werden verschwenkbar an einem zentralen Lagersockel befestigt. Zur Montage der Hintersitz-Rückenlehne ist dieser lösbar in einer Position gehalten, die er gegenüber der aufgerichteten Rückenlehne in Einbauposition einnimmt.

Der Arretierbolzen kann nun so angeordnet werden, daß er sowohl die beiden Lehnenteile als auch den zentralen Lagersockel lösbar miteinander koppelt.

Die Erfindung soll im folgenden anhand mehrerer Zeichnungen näher erläutert werden. Dabei zeigen jeweils in perspektivischer Sicht
- Fig. 1: einen Hintersitz mit dem dazugehörigen Karosseriebereich,
- Fig. 2: einen Lagerbock,
- Fig. 3a - 3d: einen Lagerbock mit einem Lagerbolzen in verschiedenen Montagesituationen und
- Fig. 4: einen zentralen Lagersockel.

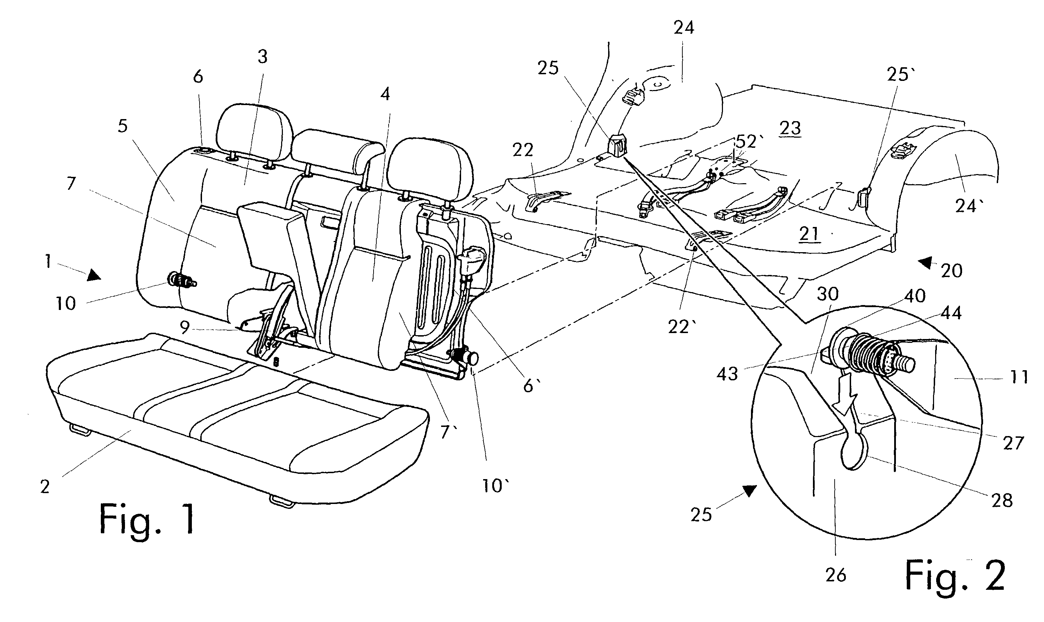

Zunächst wird auf die Fig. 1 Bezug genommen.

Diese zeigt einen Hintersitz 1 mit einer Sitzbank 2 und einer geteilten Rückenlehne 3 mit den Lehnenteilen 4 und 5, wobei der eine Lehnenteil etwas breiter ist als der andere. Jedes Lehnenteil 4, 5 besteht aus einem Rückenblech 6, 6' und einem darauf aufgeschäumten Polster 7, 7'. In der Darstellung der Figur 1 ist das Polster 7' des einen Lehnenteils 4 nur zum Teil dargestellt, so daß der Blick auf das Rückenblech 6' freigegeben ist. Das Rückenblech 6 für das andere Lehnenteil 5 wird in der Darstellung durch das Polster 7 verdeckt.

An den Außenseiten der Rückenbleche 6, 6', die einen Hinterrückenrahmen bilden, ist je ein seitlich abstehender Lagerbolzen 10, 10' angeordnet. Dazu ist jeweils eine nach vorn abgeknickte Lasche 11 (siehe Fig. 2) vorgesehen, in die der jeweilige Lagerbolzen 10 eingeschraubt wird. Beide Lehnenteile 4, 5 sind an einem zentralen Lagersockel 9 schwenkbar gelagert, der weiter unten näher beschrieben werden soll.

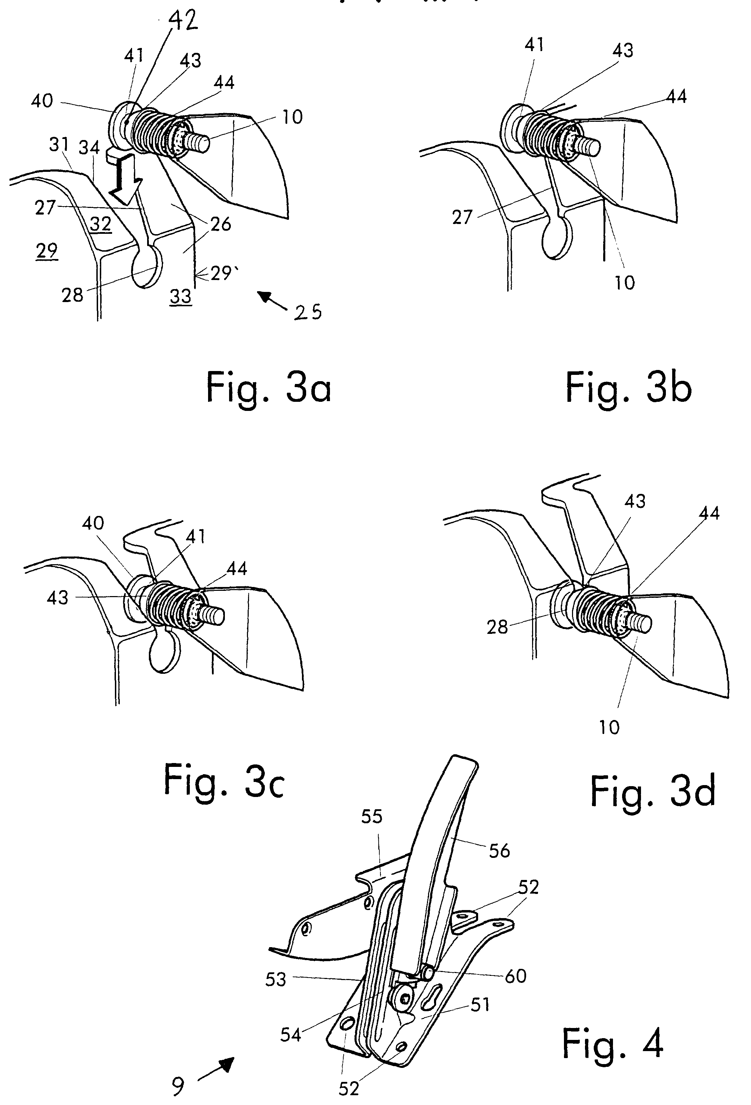

Das Bodenblech 20 besteht aus einem ersten Bereich 21, auf dem die Sitzbank 2 aufliegt. An zwei vorne liegende Scharniere 22, 22' ist die Sitzbank 2 angelenkt, damit sie nach vorne geklappt werden kann. An den ersten Bereich 21 schließt sich nach hinten ein zweiter, etwas höher liegender Bereich 23 an, der den Boden des Fahrzeugkofferraumes bildet. Links und rechts dieses zweiten Bereiches 23 befinden sich zwei Radhäuser 24, 24'. An diesen sind zwei Lagerböcke 25, 25' befestigt, die zusammen mit den Radhäusern einen Teil der Karosseriewandung bilden. Die beiden Lagerböcke 25, 25' bilden jeweils einen nach oben offenen Kasten mit einer Innenwand 26, in der ein trichterförmiger Schlitz 27 und eine Lagerausnehmung 28 ausgebildet sind (siehe Fig. 2, 3a).Beide Lagerböcke sind spiegelbildlich zueinander aufgebaut, so daß im folgenden nur der eine (rechte) beschrieben wird.

An der Innenwand 26 schließen sich zwei nach außen weisende Seitenwände 29, 29' an. Die obere Öffnung 30 des Kastens ist zumindestens so groß, daß der Bolzenkopf 40 hindurchpaßt. Von einer oben liegenden freien Kante 31 der Innenwand 26 führt der Schlitz 27 in die Lagerausnehmung 28. Der Wandabschnitt 32 mit dem Schlitz 27, verläuft schräg gegenüber dem Wandabschnitt 33 mit der Lagerausnehmung 28 und bildet dadurch eine Montageschräge. Die freie Kante 31 ist damit gegenüber der Lagerausnehmung 28 nach außen versetzt.

Die Ränder des Schlitzes 27 und der Ausnehmung 28 sind in den Kasten hinein umgebördelt (Bördelung 34). Am äußeren Ende des Lagerbolzens 10 ist, wie schon erwähnt, ein Bolzenkopf 40 vorgesehen, dessen Durchmesser größer ist als die Breite des Schlitzes 27 und der Lagerausnehmung 28. Er kann sich bei einem Crash im Kasten verhaken, wodurch verhindert wird, daß die Hintersitz-Rückenlehne aus ihrer Lagerung gerissen wird.

Der Bolzenschaft geht über eine Stufe 41 mit vergrößertem Durchmesser in den Bolzenkopf 40 über. Der Durchmesser dieser Stufe 41 entspricht in etwa der Breite des Schlitzes 27. Die Ringfläche 42 im Übergang von der Mantelfläche des Bolzens zur Mantelfläche der Stufe 41 dient als Anschlag für eine auf dem Bolzen 10 verschiebbar geführte Lagerbuchse, die in diesem Ausführungsbeispiel als Kegelhülse 43 ausgeführt ist. Das dem Bolzenkopf zugewandte Ende der Kegelhülse 43 ist im Durchmesser größer als die Breite der Schlitze 27, aber kleiner als der Durchmesser der Lagerausnehmung 28. Das andere Ende ist im Durchmesser größer als die Lagerausnehmung 28. An diesem Ende stützt sich auch eine Schraubenfeder 44 ab, die koaxial zum Lagerbolzen 10 angeordnet ist. Das andere Ende der Feder 44 liegt an der Lasche 11 an, mit der der Bolzen 10 verschraubt ist.

Aufgrund des Aufbaus von Lagerbock und Bolzen ergeben sich die folgenden Montageschritte (Fig. 3a - 3d):

Mittels eines Handhabungsautomaten wird die Rückenlehne ins Fahrzeug eingeführt, wobei die Bolzen 10, 10' zunächst senkrecht über die Lagerböcke 25, 25' gebracht werden (Figur 3a). Dabei befindet sich die durch die Ringfläche 42 gebildete Stufe 41 unmittelbar oberhalb des in die Kante 31 einmündenden Schlitzes 27. Noch drückt die Feder 44 die Kegelhülse 43 gegen die Ringfläche 42 an der Stufe 41. Beim Absenken des Hinterrückens wird zunächst der Bolzen mit seiner Stufe 41 in den Schlitz 27 eingefädelt (Figur 3b). Anschließend wird der Bolzen durch den Schlitz geführt, wobei die Kegelhülse 43 entlang der Montageschräge 32 nach innen geschoben und die Feder 44 gespannt wird (Figur 3c). Durch die Abwärtsbewegung richtet sich die Rückenlehne in die Designlage aus.

Sobald die Einbauposition (Figur 3d) erreicht ist, d. h. der Bolzen 10 sich in der Achse der Lageraufnehmung 28 befindet, drückt die Feder 44 die Kegelhülse 43 in die Lagerausnehmung 28, wobei sich diese in der Lagerausnehmung zentriert.

Der Lagersitz ist damit spielfrei, d. h. es können im Fahrbetrieb keine Klappergeräusche auftreten.

Die Rückenlehne, die - wie schon erwähnt - aus zwei Lehnenteilen 4, 5 besteht, ist im Bereich des Übergangs von einem zur anderen Lehnenteil an einem zentralen Lagersokkel 9 klappbar befestigt. Der Lagersockel besteht aus einer Grundplatte 51, die der Kontur des Bodenblechs 20 angepaßt ist. Am vorderen und hinteren Ende der Grundplatte 51 sind jeweils zwei Schraubbolzen 52 befestigt, die in entsprechende Löcher 52' im Bodenblech einsteckbar sind und mittels Muttern am Bodenblech 20 befestigt werden können. Die Schraubbolzen 52 können natürlich auch als Stehbolzen im Bodenblech ausgebildet sein, die durch Löcher in der Grundplatte 51 gesteckt werden. Aus der Grundplatte erheben sich zwei Laschen 53, 54 senkrecht nach oben, an denen schwenkbar Bügel 55, 56 angelenkt sind. Die Bügel werden an den innenliegenden Kanten der Rückenbleche der Lehnenteile 4, 5 befestigt. Die Schwenkachse der Bügel korrespondiert mit der Schwenkachse der Lagerbolzen in den Lagerböcken 25, 25'. Die Bügel 55, 56 weisen Verlängerungen mit Öffnungen auf, die mit Öffnungen in den Laschen 53, 54 fluchten. Durch diese Öffnungen wird ein abscherbarer Arretierbolzen 60 gesteckt, so daß die Bügel 55, 56 sowie der zentrale Lagersockel 9 nicht gegeneinander verschwenkt werden können. Die Positionen der Teile relativ zueinander werden so eingestellt, daß sie ihren Einbaupositionen bei aufgestellter Rückenlehne entsprechen.

Am Beginn der oben erläuterten Montage wird die Rückenlehne in eine Winkellage gebracht, die vor der Winkellage der aufgerichteten Rückenlehne in Einbaulage liegt. Beim Absenken der Rückenlehne werden, wie oben schon erläutert, die Bolzen 10, 10'in die Lagerböcke 25, 25' eingeführt und die beiden vorderen Schraubbolzen 52 in die entsprechenden vorderen Löcher 52' im Bodenblech 20 eingefädelt.

Sobald sich die Kegelhülsen 43 in den Lagerböcken 25, 25' zentriert haben, wird der Rücken nach hinten verschwenkt, bis nicht dargestellte Riegel an den Lehnenteilen 4, 5 in Schlösser 30, 30' auf den Radhäusern 24, 24' eingreifen. Gleichzeitig werden auch die hinteren Schraubbolzen 52 in die entsprechenden Löcher gesteckt. Die Rückenlehne befindet sich nun in der aufgerichteten Einbauposition, so daß der zentrale Lagersockel 9 am Bodenblech verschraubt werden kann. Wird nun eines der Lehnenteile 4, 5 nach vorne verschwenkt, reißt bzw. schert der Arretierbolzen 60 ab, so daß die Kopplung der beiden Lehnenteile untereinander und mit dem Lagersockel aufgehoben ist.

Da die Lehnenteile 4, 5 gemeinsam und zueinander ausgerichtet in das Fahrzeug eingebaut werden, fluchten ihre Schwenkachsen, so daß es beim Umlegen eines Lehnenteiles zu keinen Überschneidungen mit dem anderen Lehnenteil kommt.

## Patentansprüche

1. Umklappbare Hintersitz-Rückenlehne (3) für Kraftfahrzeuge, die beidseitig in der Karosseriewandung gelagert ist, mit einem Hinterrückenrahmen (6, 6'), an dem unten seitlich herausragende Lagerbolzen (10, 10') mit jeweils einer verschiebbaren Lagerbuchse (43) befestigt sind, wobei die Lagerbuchsen (43) in Lagerausnehmungen (28) der Karosseriewandung (26) eingreifen und an ihr innenseitig anliegen, **dadurch gekennzeichnet, daß** zwischen jeder Lagerbuchse (43) und dem Hinterrückenrahmen (6, 6') eine Feder (44) angeordnet ist, die die Lagerbuchse (43) an die Karosseriewandung (26) und in die zugehörige Lagerausnehmung (28) drückt, und daß die Lagerausnehmungen (28) in Abschnitten der Karosseriewandung mit jeweils einer freien Kante (31) vorgesehen sind, wobei ein Schlitz (27) von der freien Kante (31) in die jeweilige Lagerausnehmung (28) führt.

2. Hintersitz-Rückenlehne nach Anspruch 1, **dadurch gekennzeichnet, daß** die freien Kanten (31) oben liegende Kanten der Karosseriewandung (26) sind.

3. Hintersitz-Rückenlehne nach Anspruch 1 oder 2, **dadurch gekennzeichnet, daß** Rampen (32) für die Lagerbuchsen (43) seitlich und parallel zu den Schlitzen verlaufen, um die Federn (44) spannen zu können.

4. Hintersitz-Rückenlehne nach Anspruch 3, **dadurch gekennzeichnet, daß** der Wandabschnit der Karosseriewandung (26) mit einem Schlitz (27), zur Realisierung der Rampenfunktion (32), von oben nach unten gesehen schräg zum Innern des Fahrzeugs verläuft.

5. Hintersitz-Rückenlehne nach einem der vorhergehenden Ansprüche, **dadurch gekennzeichnet, daß** der Wandabschnitt der Karosseriewandung (26) mit einem Schlitz (27) und einer Lagerausnehmung (28) an einem kastenförmigen Lagerbock (25, 25') ausgebildet ist, der an einem Radhaus (24, 24') des Kraftfahrzeuges befestigt ist.

6. Hintersitz-Rückenlehne nach einem der vorhergehenden Ansprüche, **dadurch gekennzeichnet, daß** die Lagerbuchsen als Kegelhülsen (43) ausgebildet sind.

7. Hintersitz-Rückenlehne nach einem der vorhergehenden Ansprüche, **dadurch gekennzeichnet, daß** an den äußeren Enden der Bolzen (10, 10') jeweils ein Bolzenkopf (40) vorgesehen ist.

8. Hintersitz-Rückenlehne nach einem der vorhergehenden Ansprüche, **dadurch gekennzeichnet, daß** diese aus zwei unabhängig voneinander verschwenkbaren Lehnenteilen (4, 5) besteht, die zur Montage in einem Kraftfahrzeug lösbar derart miteinander gekoppelt sind, daß sie nicht gegeneinander verschwenkt werden können.

9. Hintersitz-Rückenlehne nach Anspruch 8, **dadurch gekennzeichnet, daß** die Lehnenteile (4, 5) mittels eines abscherbaren Arretierbolzens (60) miteinander gekoppelt sind.

10. Hintersitz-Rückenlehne nach Anspruch 8, **dadurch gekennzeichnet, daß** die Lehnenteile (4, 5) im Bereich ihrer innenliegenden, von der Karosseriewandung jeweils abgewandten Seiten verschwenkbar an einem zentralen Lagersockel (9) gehalten sind, wobei zur Montage der Hintersitz-Rückenlehne (3) im Fahrzeug der Lagersockel (9) gegenüber den Rückenlehnenteilen (4, 5) lösbar in einer Position gehalten ist, die er bei aufgerichteter Rückenlehne in Einbaulage einnimmt.

11. Hintersitz-Rückenlehne nach Anspruch 9 und 10, **dadurch gekennzeichnet, daß** der Arretierbolzen (60) die Rückenlehnenteile (4, 5) mit dem Lagersockel (9) lösbar koppelt.

## Claims

1. Folding rear seat backrest (3) for motor vehicles, which is mounted on both sides in the body panelling, with a rear back frame (6, 6') to which laterally protruding bearing bolts (10, 10') are attached at the bottom each with a slidable bearing bush (43), wherein the bearing bushes (43) engage in bearing recesses (28) of the body panelling (26) and abut against it on the inside, **characterised in that** between each bearing bush (43) and the rear back frame (6, 6') is arranged a spring (44) which biases the bearing bush (43) against the body panelling (26) and into the associated bearing recess (28), and **in that** the bearing recesses (28) are provided in sections of the body panelling each with a free edge (31), wherein a slot (27) leads from the free edge (31) into the respective bearing recess (28).

2. Rear seat backrest according to claim 1, **characterised in that** the free edges (31) are top edges of the body panelling (26).

3. Rear seat backrest according to claim 1 or 2, **characterised in that** ramps (32) for the bearing bushes (43) run laterally of and parallel to the slots in order to be able to tension the springs (44).

4. Rear seat backrest according to claim 3, **characterised in that** the wall section of the body panelling (26) with a slot (27), for performing the ramp function (32), runs obliquely to the interior of the vehicle, seen from top to bottom.

5. Rear seat backrest according to any of the preceding claims, **characterised in that** the wall section of the body panelling (26) with a slot (27) and a bearing recess (28) is formed on a box-shaped bearing block (25, 25') which is attached to a wheel arch (24, 24') of the motor vehicle.

6. Rear seat backrest according to any of the preceding claims, **characterised in that** the bearing bushes are constructed as taper sleeves (43).

7. Rear seat backrest according to any of the preceding claims, **characterised in that** at the outer ends of the bolts (10, 10') are provided in each case a bolt head (40).

8. Rear seat backrest according to any of the preceding claims, **characterised in that** it consists of two independently pivotable rest portions (4, 5) which for assembly in a motor vehicle are releasably coupled together in such a way that they cannot be pivoted relative to each other.

9. Rear seat backrest according to claim 8, **characterised in that** the rest portions (4, 5) are coupled together by means of a shearing lock bolt (60).

10. Rear seat backrest according to claim 8, **characterised in that** the rest portions (4, 5) in the region of their inner sides respectively facing away from the body panelling are held pivotably on a central bearing base (9), wherein for assembly of the rear seat backrest (3) in the vehicle the bearing base (9) is held releasably relative to the backrest portions (4, 5) in a position which it occupies when the backrest is set upright in the fitted position.

11. Rear seat backrest according to claims 9 and 10, **characterised in that** the lock bolt (60) releasably couples the backrest portions (4, 5) to the bearing base (9).

## Revendications

1. Dossier (3) de siège arrière rabattable pour véhicules automobiles qui est fixé des deux côtés dans la paroi de la carrosserie, comportant un cadre de dossier de siège (6, 6') sur lequel sont fixés des axes (10, 10') pourvus chacun d'une douille de palier (43) coulissante, qui font saillie latéralement dans la région inférieure, les douilles de palier (43) pénétrant dans des ouvertures de palier (28) de la paroi de carrosserie et étant en appui sur celle-ci côté intérieur, **caractérisé en ce qu'**entre chaque douille de palier (43) et le cadre de dossier de siège (6,6') est monté un ressort (44), qui presse la douille de palier (43) contre la paroi de la carrosserie (26) et dans l'ouverture de palier (28) concernée, et **en ce que** les ouvertures de palier (28) sont prévues dans des parties de la paroi de carrosserie qui comportent chacune un bord libre (31), une fente (27) menant du bord libre (31) à l'ouverture de palier (28) concernée.

2. Dossier de siège arrière selon la revendication 1, **caractérisé en ce que** les bords libres (31) sont des bords tournés vers le haut de la paroi de carrosserie (26).

3. Dossier de siège arrière selon la revendication 1 ou 2, **caractérisé en ce que** des rampes (32) pour les douilles de palier (43) sont disposés latéralement et parallèlement aux fentes, afin de tendre les ressorts (44).

4. Dossier de siège arrière selon la revendication 3, **caractérisé en ce que** la partie de la paroi de carrosserie (26) pourvue d'une fente (27) est inclinée en direction de l'intérieur du véhicule, vu du haut vers le bas, afin d'obtenir une fonction de rampe (32).

5. Dossier de siège arrière selon une des revendications précédentes, **caractérisé en ce que** la partie de la paroi de carrosserie (26) pourvue d'une fente et d'une ouverture de palier (28) est aménagée dans un bloc palier (25, 25') en forme de boîtier qui est fixé à un passage de roue (24, 24') du véhicule.

6. Dossier de siège arrière selon une des revendications précédentes, **caractérisé en ce que** les douilles de paliers sont conformées en douilles coniques (43).

7. Dossier de siège arrière selon une des revendications précédentes, **caractérisé en ce qu'**une tête d'axe (40) est prévue aux extrémités extérieures des axes (10, 10').

8. Dossier de siège arrière selon une des revendications précédentes, **caractérisé en ce qu'**il est formé de deux parties de dossier (4, 5) rabattables indépendamment qui, pour le montage dans un véhicule automobile, sont couplées de manière séparable de telle sorte qu'elles ne puissent pas pivoter l'une par rapport à l'autre.

9. Dossier de siège arrière selon la revendication 8, **caractérisé en ce que** les parties de dossier (4, 5) sont couplées l'une à l'autre au moyen d'un axe (60) cisaillable.

10. Dossier de siège arrière selon la revendication 8, **caractérisé en ce que** les parties de dossier (4, 5), dans la région de leur côté intérieur éloigné de la paroi de carrosserie, sont fixées avec possibilité de pivotement à un bloc palier (9) central, le bloc palier (9), pour le montage du dossier de siège arrière (3) dans le véhicule, étant fixé de manière libérable par rapport aux éléments de dossier de siège arrière dans une position qu'il occupe lorsque le dossier monté est redressé.

11. Dossier de siège arrière selon les revendications 9 et 10, **caractérisé en ce que** l'axe de blocage (60) couple les parties de dossier (4, 5) de manière démontable au bloc palier (9).
